# EUROPEAN PATENT APPLICATION

(11) **EP 4 671 101 A1**
(43) Date of publication of application: **31.12.2025**
(21) Application number: 24184717.7
(22) Date of filing: 26.06.2024
(51) Int. Cl.: B62J 50/22, G06F 3/0488

(54) **AN ELECTRONIC APPARATUS HAVING OPERATING MODES AND A METHOD FOR SWITCHING BETWEEN OPERATING MODES**

(71) Applicant: Koninklijke Philips N.V., 5656 AG Eindhoven (NL)
(72) Inventor: DEBETS, René Jozef Willem, 5656 AG Eindhoven (NL); JANSEN, Johannes Antonius, 5656 AG Eindhoven (NL); NIESSEN, Eduard Matheus Johannes, 5656 AG Eindhoven (NL)
(74) Representative: Philips Intellectual Property & Standards

(57) **Abstract**

In order to allow an apparatus comprising a limited set of control device and a display to transition between operation modes, the power on-off control device, in the active state of the apparatus, changes functionality from a basic on-off control device to an operation mode control device when actuated within a time period after actuation of the device. If the power on-off control device is actuated after this time period the original on-off functionality is retained. This allows to achieve normal on-off control, operation mode control, and menu control in an intuitive way for the user by retaining the expected functionality of the control device and using the power on-off control device to control the basic on- and off-state, as well as the operation modes within the on-state.

## Description

### FIELD OF THE INVENTION

This invention relates to an electronic apparatus having an inactive state and an active state, the active state comprising two or more operation modes, the apparatus comprising:
- an information display for displaying a first set of apparatus information when the apparatus is in the inactive state and for displaying a second set of apparatus information when the apparatus is in the active state,
- a power on-off control device having a functionality of, upon actuation of the power on-off control device, causing the apparatus to transition from the inactive state to the active state respectively from the active state to the inactive state,
- a menu input device that, when actuated while the apparatus is in the inactive state, causes the information display to display the first set of apparatus information.

### BACKGROUND OF THE INVENTION

The Nintendo Switch gaming console is such an apparatus.

The Nintendo Switch gaming console has a user interface to control several settings, select games and to control the power modes of the Nintendo Switch. The power control menu can be accessed through a long press of the power on-off button. Normally this button functions as the plain power on-off control device, but a long press brings up an extended power menu comprising more power related options of the device than just on-off. A menu control button is subsequently used to navigate through the various power related options and yet another button is then used to select the power related option.

The Nintendo Switch gaming console has the luxury of having many control devices and these devices can be used in a way consistent with their operation during normal use of the device but many devices lack this abundance of control devices, yet need to provide several operation modes as well as menus for settings and information. This is aggravated when the device has an active mode in which these operation modes need to be set in addition to other information to be displayed. An example of this is an electric bike controller. Currently the operation modes as well as the information related to both the active mode and the inactive mode are all only accessible when the drive unit of the electric bike is powered on. It would be beneficial to separate the control of the operation mode of the electric bike from the menu for settings and information related to the active mode yet avoid the extra buttons normally needed for such separation as any space taken by extra buttons that are rarely used is not available to the display which is of constant interest to the user.

It is an objective underlying the present invention to provide an improved control of the operation modes of the apparatus avoiding while minimizing the number of buttons needed.

### SUMMARY OF THE INVENTION

In order to overcome this disadvantage upon actuation of the menu input device while the apparatus is in the active state, the functionality of the power on-off device changes, during a predetermined period, to causing a transition of the apparatus between operation modes within the active state.

So instead of transitioning the apparatus from the inactive state to the active state respectively from the active state to the inactive state, the actuation of the power on-off control button temporarily functions as an operation mode selector, thus avoiding confusing the user by a change of function of the menu input device. The menu input device can retain the same expected function in the active state as in the inactive state. So, an actuation of the menu input device causes the display to display the respective set of in apparatus information when in the inactive state respectively active state and subsequent actuation of the menu input device allows navigation through respectively selection of elements in the set of apparatus information.

However, when the menu input device is actuated and subsequently the power on-off control device is actuated a transition to another operation mode of the apparatus is caused. This way the selection of operation modes within the active state is controlled by the same device that controls the transition between the inactive and the active state while the menu input device retains a consistent functionality in both the inactive mode and the active mode. It is to be noted that while the invention is being discussed using the example of an electric kike, many other apparatuses benefit from the subject matter of the claims. The motor driven apparatus can for instance be a vacuum cleaner, an electric bike, a gaming console, an infusion pump, an insulin pump, a motor driven surgical device, a breast pump, an epilator, a lawn mower, a hedge trimmer, a hair trimmer, a motor driven woodworking tool, a motor driven hand tool, or a respirator.

These devices have in common that their operation is controlled by a power on-off control device, they typically comprise a display displaying apparatus information which require navigation using input devices and they have different modes of operation that need to be selected. The designers of these apparatuses strive to both minimize the number of input devices while still allowing on-off control, operation mode control and navigating to display the desired apparatus information and thus benefit from the present invention.

In an embodiment of the apparatus actuation of the functionality of the power on-off control device returns to causing a transition of the apparatus from the inactive state to the active state respectively from the active state to the inactive state after expiration of the predetermined period.

At the expiration of the predetermined period the change of the functionality of the power on-off control device is undone and the functionality thus reverts to the control of the transition of the apparatus from the inactive state to the active state respectively from the active state to the inactive state. This the user to switch off the apparatus after changing the operation mode with a single actuation of the power on-off control device.

In order to go navigate through this information the menu control device can safely be used as the operation mode cannot be changed, only viewed, using the menu control device, as the transition between operation modes is caused by actuation of the power on-off control device. The fact that the change of functionality of the power on-off control device requires the prior actuation of the menu control device also provides a safe guard against accidental change of operation mode by accidentally actuating the power on-off control device thus. This way intuitive control, that limits the number of control devices needed for operation of the apparatus is combined with guarding against unsafe operation.

In another embodiment of the apparatus the timer is reset upon actuation of the power on-off control device while the functionality of the power on-off control device is changed to causing a transition of the apparatus between operation modes within the active state.

This allows the user to step through the modes without being interrupted by the timer which would cause a change back to the basic power on-off mode functionality of the power on-off control device, which in turns, when overlooked by the user might lead to the unexpected transition of the apparatus to the inactive state. Resetting the timer ensures the user can reach the intended operation mode. When the operation mode is reached the user will no longer actuate the power on-off control device and the timer will expire, returning the functionality of the power on-off device, as expected, to the basic power on-off mode functionality.

In a further embodiment of the apparatus said power on-off control device is configured to be responsive to a signal received from one or more of the following: an external control device, a smartphone, a charging station.

Instead of a signal derived from the actuation of a button, the power on-off control device can also receive the signal via other devices or sensors, so as to avoid the need of a manual actuation, for instance when changing an attachment or positioning the apparatus in a cleaning device.

In yet another embodiment of the apparatus said power on-off input device includes at least one push button. The power on-off button of a motor drive apparatus can be temporarily used to switch the apparatus between operation modes when the apparatus is in the active mode and the menu input device has been actuated before. This provides the user with an intuitive control of the motor drive apparatus as the power on-off button controls the apparatus to not only change between on and off state but also selects for instance the motor power or power modes such as sleep mode or a mode in which the apparatus uses less processing cores or lowers the screen illumination in between the extremes of 'on' and 'off'. When the apparatus comprises a motor, such intermediate speeds are quarter, half and three-quarter power or control characteristics that match the environment in which the apparatus is used, such as for instance for an electric bike: use in city, off road or racing.

In a further embodiment of the apparatus said display device is configured to be operable in an automatic switching mode in which different sets of information are automatically displayed one after the other. An automatic switching mode is useful in both the inactive state and in the active state as it allows the user to receive several types of apparatus information without having to actuate any input device, which is especially beneficial in the active mode while using the apparatus. For instance, when riding a bike or using a lawnmower the user wants to keep his hands at the handle bars.

In yet another embodiment of the apparatus said menu input device comprises a touch screen input device and/or a gesture detector for detecting a finger gesture.

Actuating a control device on a touch screen input device or using a gesture allows the omission of buttons which is especially beneficial for apparatus with limited room for buttons and for apparatus where hygiene is of importance. This is true for medical devices but also for general household or industrial apparatuses.

Examples of devices that benefit from the elements of the invention are: a vacuum cleaner, an infusion pump, an insulin pump, a motor driven surgical device, a breast pump, a lawn mower, a hedge trimmer, a motor driven woodworking tool, a motor driven hand tool, a respirator, etc.

These devices all tend to have limited room for a display and control devices, yet provide different operating modes and display apparatus information during an active state and often also during an inactive state of the apparatus.

In an embodiment of the apparatus the apparatus is an electric bike wherein the comprising a drive unit, the drive unit comprising a motor,
where the motor drives a wheel and wherein said operation modes of the apparatus include at least one of the following:
- a sports mode in which said drive unit provides maximum assist,
- an eco-mode in which said drive unit provides energy saving assist,
- a city mode in which said drive unit provides a fast response to an assist request,
- a mountain bike mode in which said drive unit provides a high torque response to an assist request, and
- a tour mode in which said drive unit provides a slow response to an assist request.

These operation modes all require a particular motor speed and torque control and thus the power on-off control device is suitable to control the apparatus to produce the desired motor speed as these lie between `no power' in the inactive mode to `max power' as possible in the active mode. The modes such as sports mode, eco mode, city mode and mountain bike mode all provide a different response in assist to the rider based on the selected mode characteristics. Easy selection of these modes while riding the bike enhances safety especially since a bike is often used while wearing gloves. The use of gloves requires the size of the buttons to be large for safe operation and thus minimizing the number of buttons is in this case extra beneficial to the display size that can be used. Instead of having to provide special buttons for operation mode control the functionality of the power on-off control device can be changed to provide access to the operation modes.

In a further embodiment of the apparatus the first set of apparatus information includes at least one of the following:
- a charge information in which a charging status and/or charging mode of an accumulator is displayed,
- a service information in which a required service is displayed,
- a language information in which a selectable user language is displayed,
- a lock information in which a security lock information is displayed, and
- a connectivity status in which information about a connection between the electric bike and an external device is displayed.

In the inactive state the electric bike benefits from displaying this type of information which is of interest to the user when he is not actively using the device, i.e. when the apparatus is in the inactive state.

In an embodiment of the apparatus the second set of apparatus information includes at least one of the following:
- a charge information in which a charging status of an accumulator is displayed,
- a trip time information in which in which a duration of the current trip is displayed, and
- an operation mode information in which the current operation mode is displayed.

The second set of apparatus information is of interest to the user while the apparatus is in the active state. For instance, the charge information is needed to allow the user to judge whether he can safely complete the current electric bike ride.

The operation mode information is needed to remind the user which mode he is currently in to allow him to take a decision as to whether to change the operation mode or not. The terrain of the trip might have changed in when entering a city and thus the user might only become aware of a need to change the operation mode while the apparatus is in an unsuitable operation mode in the active state.

In order to go navigate through this information the menu control device can safely be used as the operation mode cannot be changed, only viewed, using the menu control device, as the transition between operation modes is caused by actuation of the power on-off control device. The fact that the change of functionality of the power on-off control device requires the prior actuation of the menu control device also provides a safe guard against accidental change of operation mode by accidentally actuating the power on-off control device thus. This way intuitive control, that limits the number of control devices needed for operation of the apparatus is combined with guarding against unsafe operation.

A method for controlling an electronic apparatus having an inactive state and an active state, the active state comprising two or more operation modes, said electronic apparatus comprising:
- an information display for displaying a first set of apparatus information when the apparatus is in the inactive state and for displaying a second set of apparatus information when the apparatus is in the active state,
- a power on-off control device having a functionality of, upon actuation of the power on-off control device, causing the apparatus to transition from the inactive state to the active state respectively from the active state to the inactive state,
- a menu input device that, when actuated while the apparatus is in the inactive state, causes the information display to display the first set of apparatus information,
comprises the step of:
upon actuation of the menu input device while the apparatus is in the active state:
- changing the functionality of the power on-off device for a predetermined period to causing a transition of the apparatus between operation modes within the active state.

As explained above this temporary change of functionality of the power on-off control device when actuated within a time window after the actuation of the menu control device while the apparatus is in the active mode allows the transitioning between operation modes in an intuitive way.

An embodiment of the method comprises the step of:
after expiration of the predetermined period, returning the functionality of the power on-off control device to causing a transition of the apparatus from the inactive state to the active state respectively from the active state to the inactive state.

At the expiration of the predetermined period the change of the functionality of the power on-off control device is undone and the functionality thus reverts to the control of the transition of the apparatus from the inactive state to the active state respectively from the active state to the inactive state. This allows the user to switch off the apparatus after changing the operation mode with a single actuation of the power on-off control device.

In another embodiment of the method the timer is reset upon actuation of the power on-off control device while the functionality of the power on-off control device is changed to causing a transition of the apparatus between operation modes within the active state.

This allows the user to step through the modes without being interrupted by the timer which would cause a change back to the basic power on-off mode functionality of the power on-off control device, which in turns, when overlooked by the user might lead to the unexpected transition of the apparatus to the inactive state. Resetting the timer ensures the user can reach the intended operation mode. When the operation mode is reached the user will no longer actuate the power on-off control device and the timer will expire, returning the functionality of the power on-off device, as expected, to the basic power on-off mode functionality.

### BRIEF DESCRIPTION OF THE DRAWINGS

Fig. 1 shows exemplary apparatuses with the control and display elements of the invention.
Fig. 2 shows a prior art user interface for an apparatus having a power button, menu button and display.
Fig. 3 shows another prior art user interface for an apparatus having a power button, menu button and display.
Fig. 4 shows a user interface where the power on-off control device is temporarily changed using the menu control device to select operation modes.
Fig. 5 shows a user interface where the functionality of the power on-off control is temporarily changed using a long press of the power on-off control to select operation modes.
Fig. 6 shows the structure of a controller for the apparatus.

### DETAILED DESCRIPTION OF THE EMBODIMENTS

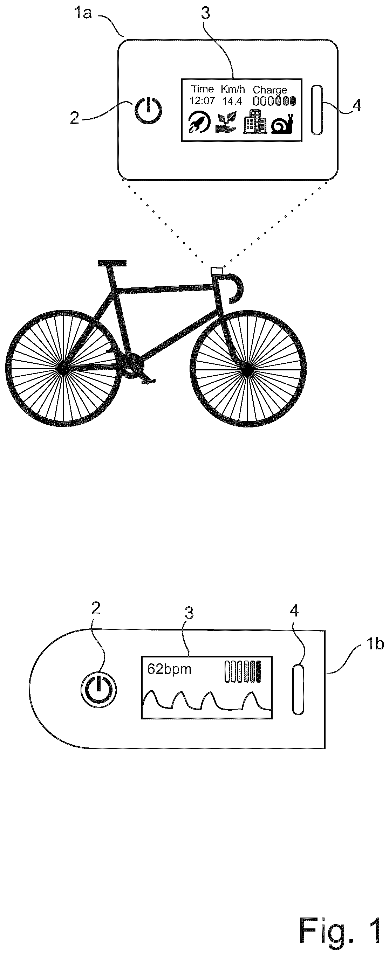

Fig. 1 shows exemplary apparatuses with the control and display devices of the invention.

In Fig. 1 multiple apparatuses are shown to illustrate the invention can be applied to a range of apparatuses. The apparatus 1a is an electric bike. Electric bikes are provided with a small control panel where there is little room for more control devices than just a power on-off control device 2, a menu input device 4 and for a display 3. Any additional control device results in less space for the display 3. The same applies to a an SpO2 measuring apparatus 1b. As such there is a general interest in minimizing the number of control devices and to restrict the size of the display used.

Besides the basic power on-off control, these apparatuses presently have different operation modes. For instance, the electric bike 1a can have several operational modes in which the power of the motor of the drive unit that drives the wheel differs between modes, or can use characteristic drive curves for the drive unit that are catered to the environment the electric bike is used in. In addition to the operation modes, the electric bike also has a display 4 to display apparatus information relating to the general state of the electric bike, such as battery charge level, battery charge progress, connectivity settings/status, and service information. This type of information is valid both in the active and the inactive state of the electric bike but are typically accessed when the drive unit is inactive. In the active state of the electric bike the display 4 can display information that is only related to the active state such as current operational mode, trip duration etc.

The electric bike 1a comprises a motor and the operation modes are typically related to the operation of the motor but there are other devices that are motorless but have similar constraints caused by size, for example an SpO2 measuring apparatus 1b that is designed to fit on the finger of the user. Also here, it is beneficial to use a limited number of control devices to allow the size of the display to be as big as possible. An SpO2 measuring apparatus 1b, like the electric bike 1a, has operational modes to be selected and menus to be shown on the display, and illustrates that the invention is likewise beneficial for motorless apparatuses. The SpO2 meter can in the active state have both a measuring mode in which the SpO2 is constantly measured but not stored in a memory and a logging mode in which the SpO2 sporadically measures the SpO2 stores this value in a memory and goes in between measurements into a low power mode to improve battery life. Also, in this logging mode the display is dimmed or switched off to conserve energy. Other examples of suitable apparatuses are a vacuum cleaner, an infusion pump, an insulin pump, a motor driven surgical device, a breast pump, a lawn mower, a hedge trimmer, a motor driven woodworking tool, a motor driven hand tool, a respirator, etc. These all have several operation modes, have apparatus information to display and benefit from a limited number of control devices either caused by size restrictions or production cost consideration.

In the following figures the description uses an electric bike as an exemplary apparatus to explain the invention.

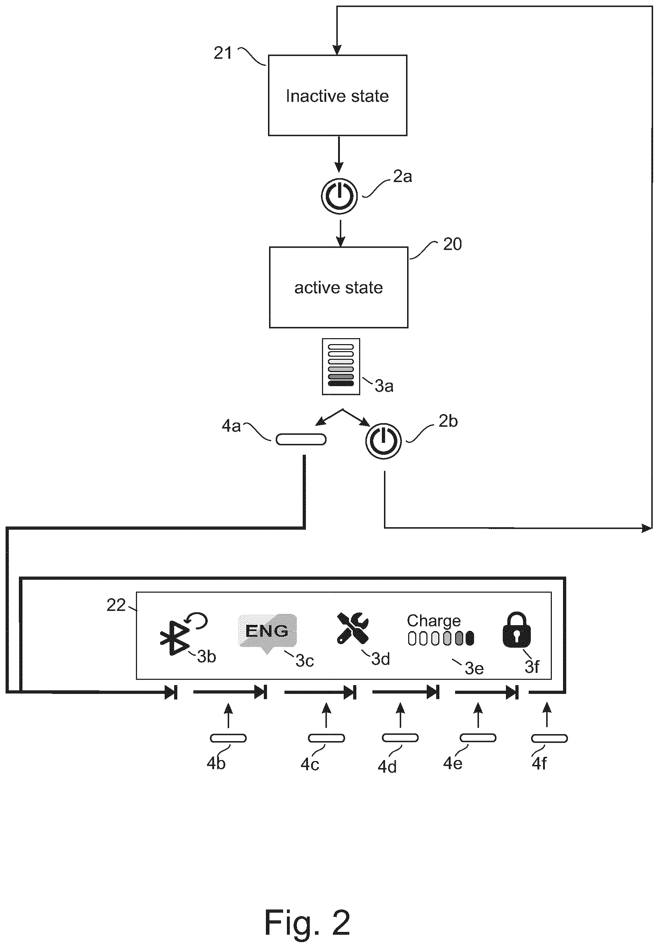

Fig. 2 shows a prior art user interface for an apparatus having a power button, menu button and display.

A typical electric bike has two states: an inactive state 21 and an active state 20. A first actuation of the power on-off control device 2a transitions the electric bike from the inactive state 21 to the active state 20 in which the display becomes active and the drive unit is ready to start driving the wheel. The subsequent actuation of the power on-off control device 2b transitions the electric bike from the active state 20 to the inactive state 21.

The electric bike also has a menu control device and a display. Actuation of the menu control device 4a causes the display to display a first apparatus information 3a of a first set of apparatus information 22. By subsequently actuating the menu control device 4b, 4c a second and third apparatus information 3b, 3c of the first set of apparatus information 22 is subsequently shown.

The power on-off control device and menu control device thus have different functionality, the power on-off control device only affecting the inactive/active state of the electric bike and the menu control device only affecting the display of information on the display. An operation mode transition in this case is caused by the menu control device navigating to an operation mode sub menu in the set of apparatus information displayed by the display.

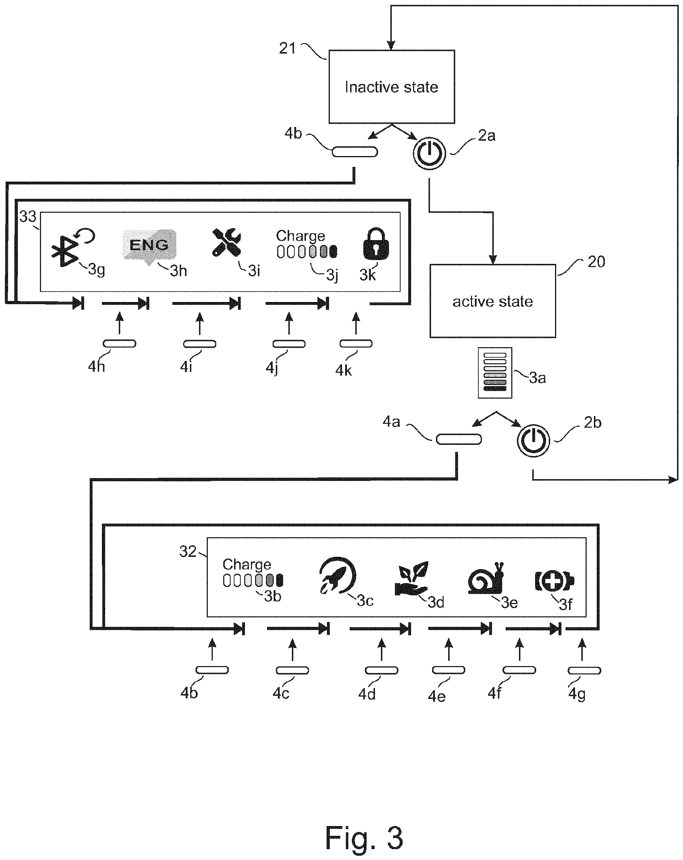

Fig. 3 shows another typical user interface for an apparatus having a power button, menu button and display.

Some interaction between the power on-off control device and the menu control device is possible, for instance when actuation 2a the power on-off control device caused the electric bike to be in the inactive state 21, actuation of the menu control device 4b, 4c can cause the display to display apparatus information 3b, 3c belonging to a first set of apparatus information 22 which in turn is advantageously related to the inactive state 21 of the apparatus, while when actuation of the power on-off control device 2b caused the electric bike to be in the active state 20, actuation of the menu control device 4d, 4e causes the display to display apparatus information belonging to a second set of apparatus information 23 which is related to the active state 20 of the electric bike. The actuation of the menu control device 4d, 4e while the electric bike is in the active state 20 can also transition the electric bike between operational modes that exist within the active state. This however conflicts with the control of the displaying of the menu with apparatus information that is not related to the operation modes as the menu control device's function changed from menu control to operation mode control. This means that the operation mode can accidentally be changed when the user intends to navigate away from the mode control submenu but accidentally actuates the menu control device in a way to select the operation mode.

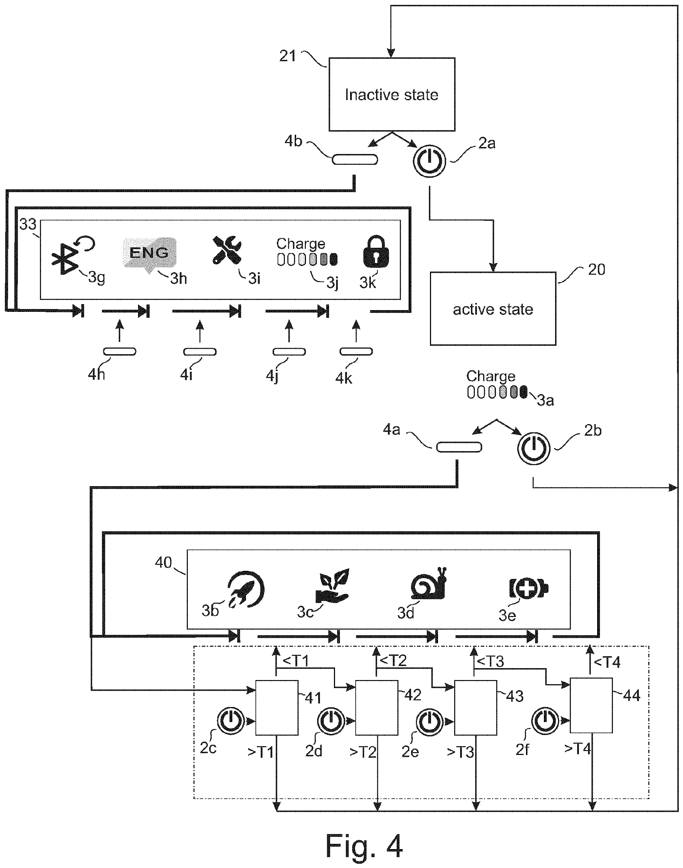

Fig. 4 shows a user interface where the function of the power on-off control device is temporarily changed using the menu control device to select operation modes.

In Fig. 4 when starting in the inactive state actuation 2a of the power on-off control device causes the apparatus to transition from the inactive state 21 to the active state 20. In the case of an electric bike as used for illustration of the principles in these figures, the electric bike turns on and the drive unit is ready to start driving the wheel upon request by the user.

Actuation 2b of the power on-off control device in the active state 21, without prior actuation of the menu control device, causes the bike to return to the inactive state 20.

Actuation of the menu control device in the active state causes the apparatus to start displaying a set of apparatus information 23 related to the active state of the electric bike, such as battery charge level, speed, trip time, trip distance, date and/or time, etc.

Actuation of the menu control device 4a also starts a timer and the apparatus checks, upon the actuation 2c of the power on-off control device, whether the timer 42 expired or not.

In case the timer 42 expired before the actuation 2c of the power on-off control device, the power on-off control device retains its basic functionality of transitioning the apparatus between the inactive state and the active state and vice versa. The user can thus actuate the power on-off control device to power on and off the electric bike as expected. The normal functionality of the power on-off control device is thus retained, even if the user actuates the menu control device while the apparatus is in the active state.

In case the timer 42 did not expire before the actuation 2c of the power on-off control device, the functionality of the power on-off control device is changed into an operation mode control device, i.e. actuation 2c of the power on-off control device no longer causes the apparatus to transition between the active and inactive states 20, 21 but causes the apparatus to transition between the operation modes 3d, 3e, 3f within the active state 20. For example, successive actuations 2d, 2e of the power on-off control device causes the apparatus to transition successively from a first operation mode 3d, such as a sports operation mode, to a second operation mode 3e, such as a eco operation mode, to a third operation mode 3f, such as a slow operation mode, and so on. When the last operation mode 3f is reached by successive actuations 2d, 2e of the power on-off control device, the next actuation 2f will cause the apparatus to transition to the first operation mode 3d, thus creating a circular set of operation modes 24. Using a circular set of operation modes 24 allows a large number of operation modes to be selected and allows easy expansion if needed.

Each transition between operation modes 3d, 3e, 3f caused by the actuation 2d, 2e, 2f of the power on-off control device causes a second timer 42 to be started (for clarity only shown for the second actuation 2e). When a successive actuation 2d, 2e, 2f of the power on-off control device occurs before the expiry of the second timer 42, the successive actuation causes the transition to the next operation mode as described in the previous paragraph. If the timer 42 however expired before the actuation 2d, 2e, 2f of the power on-off control device the functionality of the power on-off control device returns to the basic on-off control functionality and the apparatus is caused to return to the inactive state 21 by this actuation.

The actuation 4a of the menu control device, without the subsequent actuation 2c of the power on-off control device, causes the apparatus to display apparatus information 3a of the first set of apparatus information 23, i.e. the menu control device retains its functionality as expected by the user. Subsequent actuation 4b, 4c, 4d causes the apparatus to display the next apparatus information from the second set of apparatus information 23.

The user can thus actuate the menu control device to successively display the second set of apparatus information as expected. The normal functionality of the menu control device is thus retained, also if the user actuates the menu control device while the apparatus is in the active state.

When the apparatus is in the inactive state the menu control button can as expected cause the apparatus to start displaying the first set of apparatus information and successive actuations of the menu control device also allows the user to navigate through the displayed information as expected. In the inactive state, the power on-off control device also only has the functionality of causing the apparatus to transition into the active state, as expected by the user.

As such, this allow the apparatus to retain the expected functionality while at the same time allowing the transitioning between operation modes with the same control device, the power on-off control device, that is also used for transitioning between what the user experiences as operation modes: the on-state/ active state and the off-state/ inactive state.

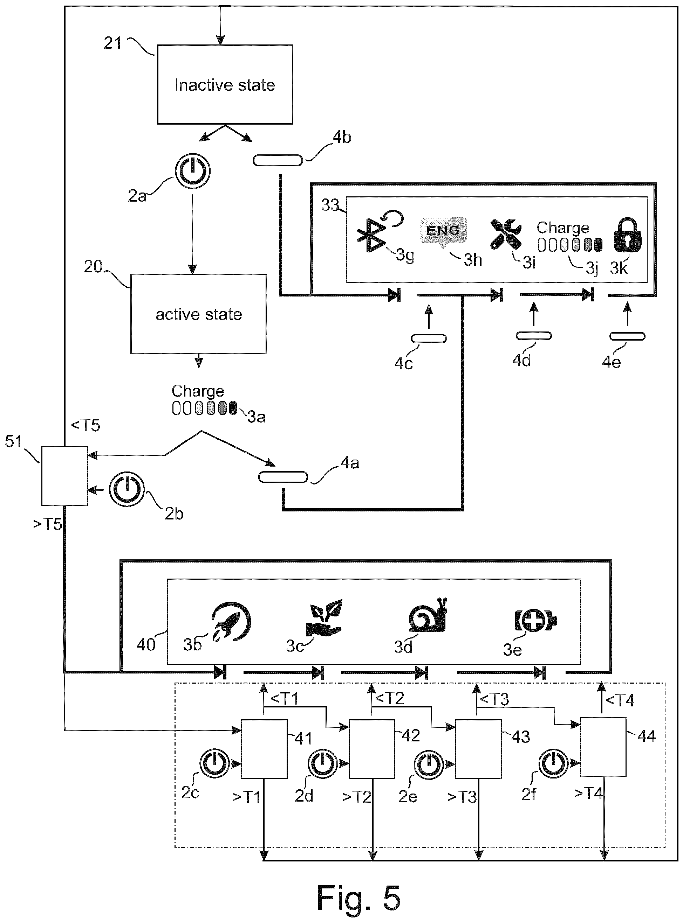

Fig. 5 shows a user interface where the power on-off control is temporarily changed using a long press of the power on-off control to select operation modes.

The operation of the apparatus in Fig. 5 is similar to Fig. 4 and only the differences will be discussed.

When the apparatus is in the active state 20, the actuation 2c of the power on-off control device will cause the functionality of the power on-off control device to change from power on-off control to operation mode control as in Fig. 4 but not dependent on the previous actuation of the menu control device but dependent on the duration of the actuation of the power on-off control device itself. For this a timer 43 is started upon actuation 2c the power on-off control device.

If the actuation 2c of the power on-off control device is still detected upon the expiry of the timer 43, the functionality of the power on-off control device will transition to operation mode control and further actuations 2d, 2e, 2f of the power on-off control device will cause the apparatus to transition between the operation modes as in Fig. 4.

If the actuation 2c of the power on-off control device ends before the expiry of the timer 43, the apparatus will transition to the inactive state.

Actuation 4a of the menu control device will cause the apparatus to start displaying the second set of apparatus information 23. A short actuation 2b of the power on-off control device while the apparatus is displaying the second set of apparatus information will cause the apparatus to transition to the inactive state. This latter transition to the inactive state can be made dependent on a long press detection, i.e. if a short press is detected the apparatus transitions to the inactive state while if a long press is detected the functionality of the power on-off control device is, as described above, changed to operation mode control.

Fig. 5 does not show this check in order to avoid cluttering the figure. The principle is the same as explained above for the long press detection.

It is to be noted that everywhere in the description an operation mode, when transitioned to, can be indicated by text or an icon on the display, as well as through haptic feedback or optical signaling such a color changes or brightness changes of an indicator light.

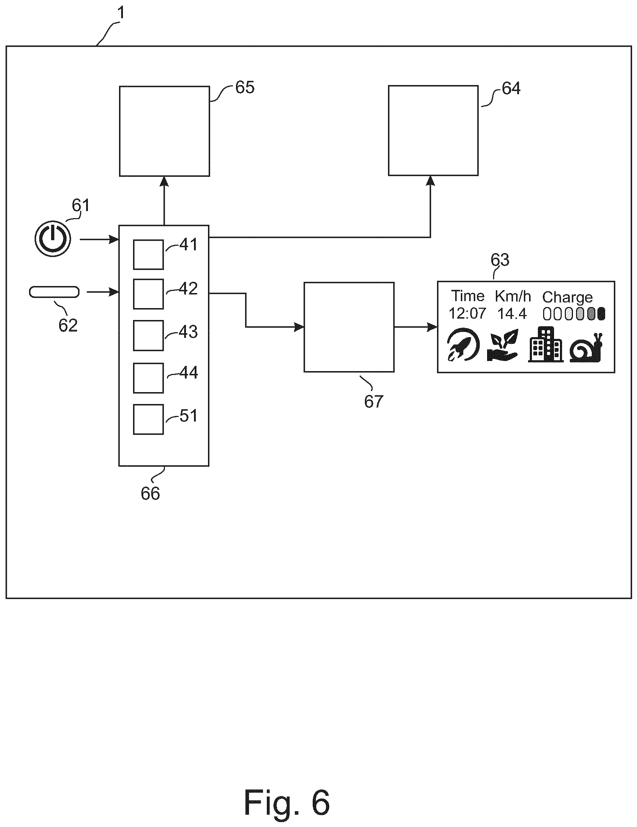

Fig. 6 shows the elements of the apparatus.

The apparatus 1 comprises a controller 60 which can be a dedicated electronic circuit comprising a apparatus power controller 65, a decision logic 66, and a menu controller 67 and an operation mode controller 64. As these blocks can also implemented in software a general-purpose microcomputer circuit can also be used as controller 60.

The controller 60 is coupled to the power on-off control device 61, the menu control device 62, the display 63 and the driver circuit of which the operation modes have to be controlled.

The actuation signal from the power on-off control device 61 and the menu control device are both received by the decision logic 66. The decision logic 66 further comprises the timers 41, 42 needed for checking the intended functionality of the power on-off control device 61 as explained in the Figs. 4 and 5.

When the functionality is determined by the decision logic 66 to be the transitioning between the active and inactive states, the decision logic 66 will route the actuation signal from the power on-off control device 61 to the power controller 65 so that the power controller 65 can effect the transition of apparatus 1 between the inactive and active states.

When the functionality is determined by the decision logic 66 to be the transitioning between operation modes, the decision logic 66 will route the actuation signal from the power on-off control device 61 to the operation mode controller 64 so that the operation mode controller 64 can effect the transition of apparatus 1 between the operation modes within the active state.

The decision logic 66 will route the power on-off control device signal based on whether it received the actuation signal of the menu control device 62 and based on whether the first timer 41 respectively second timer 42 expired or not, as explained above in Figs. 4 and 5.

The decision logic can also route the actuation signal of the menu control device 62 to the menu controller 67 directly in order to cause the menu controller 67 to display the apparatus information on the display 63, but the menu controller can also receive the actuation signal of the menu control device 62 from the decision logic.

Lastly the decision logic 66 can also, based on the present functionality of the power on-off control device 61, cause the menu controller 67 to cause the display 63 to display an indication of the current operation mode.

## Claims

1. An electronic apparatus having an inactive state and an active state, the active state comprising two or more operation modes, the apparatus comprising:
- an information display for displaying a first set of apparatus information when the apparatus is in the inactive state and for displaying a second set of apparatus information when the apparatus is in the active state,
- a power on-off control device having a functionality of, upon actuation of the power on-off control device, causing the apparatus unit to transition from the inactive state to the active state respectively from the active state to the inactive state,
- a menu input device that, when actuated while the apparatus is in the inactive state, causes the information display to display the first set of apparatus information,
**characterized in that** upon actuation of the menu input device while the apparatus is in the active state, the functionality of the power on-off device changes, during a predetermined period, to causing a transition of the apparatus unit between operation modes within the active state.

2. An electronic apparatus as claimed in claim 1,
where after expiration of the predetermined period, the functionality of the power on-off control device returns to causing a transition of the apparatus from the inactive state to the active state respectively from the active state to the inactive state.

3. An electronic apparatus as claimed in claim 1,
where a further actuation of the power on-off control device during the predetermined period causes an extension of the predetermined period.

4. An electronic apparatus according to one of the preceding claims, wherein said power on-off input device includes at least one push button.

5. An electronic apparatus according to one of the preceding claims, where the first set of apparatus information comprises information related to the inactive state of the apparatus and the second set of apparatus information is related to the active state of the apparatus.

6. An electronic apparatus as claimed in claim 1, wherein said display device is configured to be operable in an automatic switching mode in which different apparatus information is automatically displayed one after the other.

7. An electronic apparatus as claimed in claim 1, wherein said menu input device comprises a touch screen input device and/or a gesture detector for detecting a finger gesture.

8. An electronic apparatus according to any of the preceding claims, wherein the electronic apparatus is an electric bike comprising a drive unit, the drive unit comprising a motor,
where the motor drives a wheel and wherein said operation modes of the apparatus include at least one of the following:
- a sports mode in which said drive unit provides maximum assist,
- an eco-mode in which said drive unit provides energy saving assist,
- a city mode in which said drive unit provides a fast response to an assist request,
- a mountain bike mode in which said drive unit provides a high torque response to an assist request, and
- a tour mode in which said drive unit provides a slow response to an assist request.

9. An electric bike as claimed in claim 8, wherein the first set of apparatus information includes at least one of the following:
- a charge information in which a charging status and/or charging mode of an accumulator is displayed,
- a service information in which a required service is displayed,
- a language information in which a selectable user language is displayed,
- a lock information in which a security lock information is displayed, and
- a connectivity status in which information about a connection between the electric bike and an external device is displayed.

10. An electric bike as claimed in claim 8, wherein the second set of apparatus information includes at least one of the following:
- a charge information in which a charging status of an accumulator is displayed,
- a trip time information in which in which a duration of the current trip is displayed, and
- an operation mode information in which the current operation mode is displayed.

11. An electronic apparatus as claimed in any one of the claims 1 to 7, where the apparatus is one of a vacuum cleaner, an infusion pump, an insulin pump, a motor driven surgical device, a breast pump, a respirator, a lawn mower, a hedge trimmer, a motor driven woodworking tool, a motor driven hand tool.

12. A method for controlling an electronic apparatus having an inactive state and an active state, the active state comprising two or more operation modes, said electronic apparatus comprising:
- an information display for displaying a first set of apparatus information when the apparatus is in the inactive state and for displaying a second set of apparatus information when the apparatus is in the active state,
- a power on-off control device having a functionality of, upon actuation of the power on-off control device, causing the apparatus to transition from the inactive state to the active state respectively from the active state to the inactive state,
- a menu input device that, when actuated while the apparatus is in the inactive state, causes the information display to display the first set of apparatus information,
**characterized in that** the method comprises the step of:
upon actuation of the menu input device while the apparatus is in the active state:
- changing the functionality of the power on-off device for a predetermined period to causing a transition of the apparatus between operation modes within the active state.

13. A method as claimed in claim 12,
where the method comprises the step of:
after expiration of the predetermined period, returning the functionality of the power on-off control device to causing a transition of the apparatus from the inactive state to the active state respectively from the active state to the inactive state.

14. A method as claimed in claim 12, where the method comprises the step of upon a further actuation of the power on-off control device during the predetermined period extending the predetermined period.

15. A method as claimed in claim 12, 13 or 14, where a long press actuation of the power on-off control device always causes the apparatus to return to the inactive state.
